Europäisches Patentamt

(19) European Patent Office

Office européen des brevets

(11) Numéro de publication : **0 018 911**
**B1**

(12) **FASCICULE DE BREVET EUROPÉEN**

(45) Date de publication du fascicule du brevet :
**22.06.83**

(21) Numéro de dépôt : **80400591.6**

(22) Date de dépôt : **29.04.80**

(51) Int. Cl.³ : **H 04 Q 11/04**, G 06 F 5/00,
**H 04 Q 3/54**

(54) **Unité logique de gestion de messages.**

(30) Priorité : **04.05.79 FR 7911322**

(43) Date de publication de la demande :
**12.11.80 Bulletin 80/23**

(45) Mention de la délivrance du brevet :
**22.06.83 Bulletin 83/25**

(84) Etats contractants désignés :
**AT BE CH DE FR GB IT LI LU NL SE**

(56) Documents cités :
**FR A 1 587 656
FR A 2 346 930
FR A 2 368 087
1978 INTERNATIONAL CONFERENCE ON
COMMUNICATIONS, vol. 2, 4-7 juin 1978
TORONTO (CA) C. CESARATTO et al. : « DMS-200
Control Structure », pages 32.2.1 à 32.2.5
IBM TECHNICAL DISCLOSURE BULLETIN,
Vol. 17, no. 6, novembre 1974 NEW YORK (US)
C. A. HANNA et al. : « Bit Manipulator »,
pages 1575/1576**

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Thiaud, Jacques**
**2, rue du Maréchal de Lattre de Tassigny**
**F-78000 Versailles (FR)**
Inventeur : **Le Gouguec, Robert**
**3, Rue Malban**
**F-22700 Perros-Guirec (FR)**

(74) Mandataire : **Weinmiller, Jürgen et al**
**Zeppelinstrasse 63**
**D-8000 München 80 (DE)**

Jouve, 18, rue St-Denis, 75001 Paris, France

# 0 018 911

## Unité logique de gestion de messages

L'invention concerne une unité logique de gestion des messages échangés entre un calculateur et des périphériques dans un système de télécommunications, notamment dans un commutateur piloté par un calculateur central pour la gestion des messages échangés entre le calculateur central et des groupes de périphériques assurant l'émission et la réception de la signalisation et le marquage des itinéraires dans un réseau de connexion.

Le but de l'invention est en particulier de réaliser une unité logique pour un autocommutateur téléphonique piloté par un calculateur central, ladite unité logique gérant les messages échangés entre le calculateur central et des groupes de périphériques assurant l'émission et la réception de la signalisation téléphonique et le marquage des itinéraires dans le réseau de connexion.

Dans un autocommutateur de grande capacité à commande centralisée, le nombre de messages que doit traiter en temps réel la commande centrale est très élevé, et le calculateur serait surchargé s'il devait à la fois en assurer la gestion et le traitement.

Une solution consiste à décentraliser dans les périphériques les tâches simples et répétitives. On aboutit à la création de périphériques dits « intelligents ». Un inconvénient est que, pour un gros système, on aboutit à des périphériques complexes et spécifiques des diverses tâches, ce qui est une solution coûteuse.

On se reportera à titre d'exemple à l'article de C. J. Hughes « Programmable logic, a new approach to standardization » paru dans la revue « Post Office Electrical Engineers Journal » de Janvier 1971, p. 227 à 232.

Un autre type de solution, qui est celui auquel s'applique l'invention, consiste à utiliser un niveau de gestion intermédiaire : des unités logiques gérant les messages provenant de périphériques de diverses natures, et dialoguant avec le calculateur suivant une procédure normalisée. Dans les très gros systèmes, les unités logiques peuvent être spécialisées, les procédures d'échange avec le calculateur restant les mêmes pour toutes les unités logiques.

Dans ce type de solution, le rôle des unités logiques est d'assurer le débit et l'aiguillage des messages dans les deux sens, de contrôler leur validité et d'adapter le format du message à la procédure utilisée par le destinataire : un autocommutateur utilisant des unités logiques de ce type est décrit notamment dans la demande de brevet FR-A 2 346 930. Un inconvénient de la technique connue provient du fait que la durée de traitement nécessaire à l'unité logique pour transformer le format des messages est prohibitive dans le cas d'un autocommutateur téléphonique de grande capacité. Le but de l'invention est de réaliser une unité logique permettant un traitement rapide des messages.

L'invention a pour objet une unité logique telle que spécifiée ci-dessus, qui est caractérisée en ce qu'elle comporte : un bloc d'assemblage de champ réalisant l'assemblage par décalage d'une information source et superposition d'un masque, et comprenant un dispositif de décalage relié par l'intermédiaire d'un registre à un bus d'information source sur lequel sont acquises les informations traitées par une instruction et à un circuit de préparation de masque, la superposition du masque et du contenu du registre étant réalisée par un groupe de portes reliées, d'une part, à la sortie du dispositif de décalage et, d'autre part, à un bus d'information destination véhiculant les informations après traitement, et en ce qu'elle comprend une unité arithmétique et logique dont l'une des entrées d'opérande est reliée à la sortie du groupe de portes et dont la sortie est reliée au bus d'information source, les liaisons avec l'extérieur étant réalisées par les bus d'information source et destination reliés à des modules d'échanges et l'ensemble étant piloté par une horloge, et que le dispositif à décalage comporte un circuit de préparation de masque générant un mot formé d'une série de 1 suivie d'une série de 0, le masque subissant lui-même un décalage.

Un mode de réalisation de l'invention va être décrit à titre d'exemple, à l'aide des figures annexées qui représentent :

figure 1, un autocommutateur équipé d'unités logiques de gestion suivant l'invention,

figure 2, une unité logique de gestion,

figure 3, un dispositif de décalage des informations,

figure 4, les signaux fournis par l'horloge qui rythme les opérations de l'unité logique de gestion,

figure 5, le dispositif de calcul d'adresses,

figure 6, un organigramme du fonctionnement de l'unité logique dans le cas de traitement des tâches en série,

figure 7, un organigramme du traitement des tâches avec priorité fixe,

figure 8, les dispositifs d'échange d'informations entre l'unité logique, le calculateur et les périphériques.

L'exemple que l'on va décrire concerne un central téléphonique à réseau de connexion temporel et à commande centralisée.

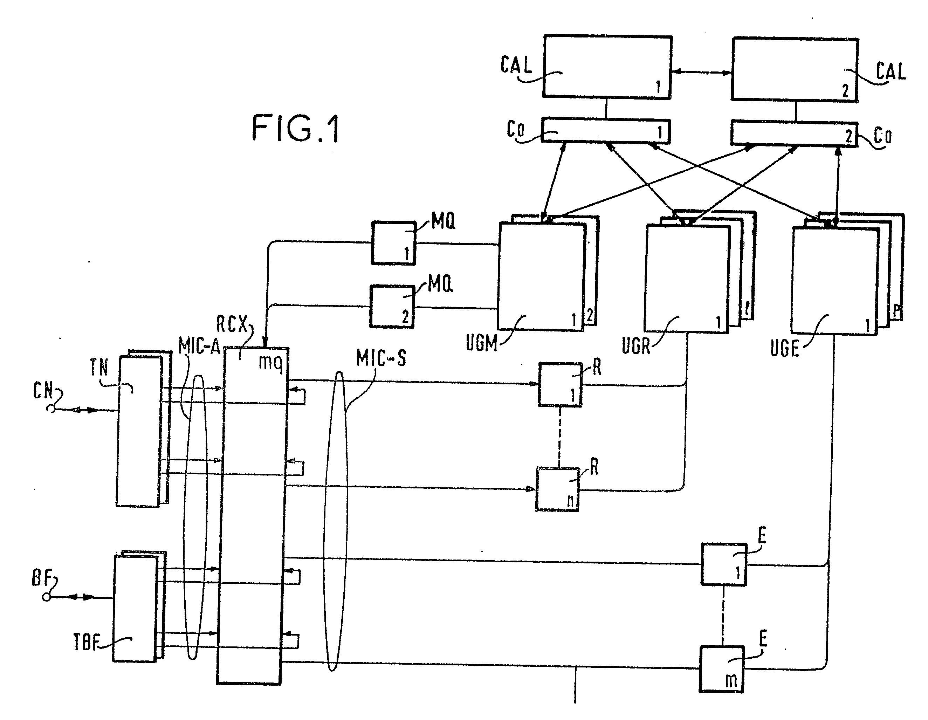

Le central comporte (fig. 1) un réseau de connexion temporel RCX. Les circuits et les équipements d'abonnés sont reliés au réseau de connexion par des terminaux (TN, TBF). Les terminaux numériques TN permettent le raccordement de circuits numériques CN à multiplexage temporel. Les terminaux basses fréquences TBF réalisent les conversions A/D et D/A pour les circuits et équipements d'abonnés basse fréquence BF.

2

# 0 018 911

Les terminaux sont reliés au réseau de connexion par des liaisons numériques à multiplexage temporel (MIC-A), par exemple des MIC à la norme européenne, comportant 32 canaux de 8 e. b. (éléments binaires) échantillonnés à la fréquence de 8 kHz. Le central est commandé par deux calculateurs CAL travaillant par exemple en partage de charge. Les calculateurs pilotent des groupes de périphériques permettant le marquage du réseau de connexion et la réception et l'émission de la signalisation. Dans cet exemple de l'invention les unités de gestion qui réalisent les échanges de messages entre calculateurs et périphériques sont spécialisées dans une fonction :

— des unités de gestion de marqueurs UGM pilotent des marqueurs MQ pour la commande du réseau de connexion ;

— des unités de gestion de récepteurs UGR pilotent les périphériques de réception R de la signalisation téléphonique ;

— des unités de gestion d'émetteurs UGE pilotent les périphériques d'émission E de la signalisation.

Les périphériques de signalisation R, E sont reliés au réseau de connexion par des liaisons à multiplexage temporel MIC-S analogues à celles qui relient les terminaux MIC-A. On considérera ici le cas de la signalisation voie par voie définie par le CCITT. Pour mémoire, les trames des MIC-A sont organisées en multitrames de 16 trames. La signalisation est portée par les voies numéro 16 (IT16) des trames, la trame i portant la signalisation des voies i et i + 16 codées chacune sur 4 e. b.

Le réseau de connexion relie les voies 16 (IT16) de 31 MIC-A à 31 voies d'un MIC-S, la voie restante du MIC-S étant affectée aux signaux de synchronisation. Un MIC-S porte donc la signalisation de $30 \times 31 = 930$ circuits téléphoniques, avec la fréquence de récurence de la multitrame des MIC-A (500 Hz).

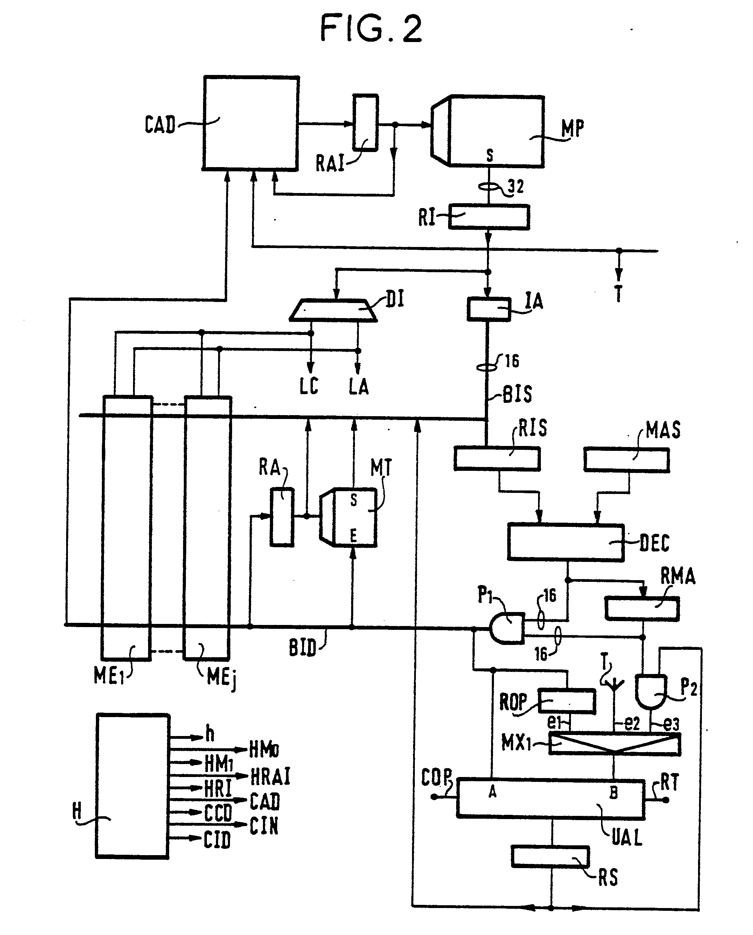

On va décrire l'architecture et le fonctionnement d'une unité logique utilisable pour les unités UGM, UGR, UGE citées plus haut et également pour d'autres fonctions car il s'agit d'une unité à usage général. On décrira ensuite les moyens et procédures d'échange de messages avec les calculateurs et les périphériques. L'unité logique est une machine microprogrammée ayant une durée de cycle unique pour toutes les instructions. Les liaisons avec l'extérieur sont réalisées par des modules d'échanges ME1 à MEJ comportant des registres et/ou des mémoires tampons (fig. 2).

La machine est organisée autour de bus d'informations et de liaisons de commande permettant les échanges internes et externes :

— un bus d'information source BIS sur lequel sont acquises les informations traitées par une instruction ;

— un bus d'information destination BID véhiculant les informations après traitement ;

— une liaison d'adresse LA pour l'acheminement successif des adresses source et destination ;

— une liaison de commande LC véhiculant un mot programme.

La mémoire programme MP, par exemple une mémoire morte, est adressée par un registre RAI relié à un dispositif de calcul d'adresse CAD. Le mot programme en cours est stocké dans un registre d'instruction RI. La sortie de ce registre est reliée à un décodeur d'instruction DI et par un interface d'adaptation IA, au bus source BIS. Le décodeur DI décode les parties adresse et commande du mot d'instruction et ses sorties sont reliées aux liaisons d'adresse LA et de commande LC. La sortie du registre RI est également reliée au dispositif de calcul CAD. L'unité logique comporte également un bloc d'assemblage de champs d'éléments binaires et un bloc de calcul.

Le bloc d'assemblage de champ, qui constitue une partie essentielle de l'invention, sera décrit en détail plus loin. L'assemblage est effectué par décalage d'une information source et superposition d'un masque.

Le bloc d'assemblage de champ comporte un décaleur DEC dont les entrées sont reliées à un registre RIS relié au bus BIS, et à un circuit de préparation de masque MAS. En effet, comme on le verra plus loin, pour simplifier le circuit MAS et sa commande, le masque est lui-même décalé par le circuit DEC et stocké en sortie de ce circuit dans un registre RMA. La superposition du masque et du contenu du registre RIS ayant subi un décalage est réalisée par un groupe de 16 portes « ET » P1 dont les 2 entrées sont reliées respectivement aux sorties du décaleur et du registre RMA. Le groupe de porte P1 est relié au bus BID.

Le bloc de calcul comporte une unité arithmétique et logique UAL formée par exemple de boîtiers 74181 fabriqués par la société Texas Instruments. La sortie du circuit UAL est reliée à un registre RS connecté au bus BIS. Une entrée d'opérande A du circuit UAL est reliée à la sortie de la porte P1. L'accès à l'autre entrée B du circuit UAL est réalisé par un multiplexeur MX1 à 3 entrées ; e1, e2, e3. L'entrée e1 est reliée à un registre ROP chargé en sortie de la porte P1. L'entrée e2 est reliée à une sortie T du registre d'instructions RI et donne accès à un opérande de test. La 3e entrée e3 est reliée à la sortie d'une porte « ET » P2 reliée aux sorties des registres RMA et RS. Le code d'opération utilisé par le circuit UAL sera décrit plus loin. Il est reçu à l'entrée COP reliée aux lignes LC du décodeur DI. Une sortie RT du circuit UAL indique le résultat de tests et est utilisé par le circuit CAD pour commander des sauts de programme.

Les modules d'échanges externes ME sont reliés aux bus BIS, BID et aux lignes LC et LA. On a représenté à titre d'exemple un module constitué par une mémoire de travail MT et son registre d'adresse RA tous deux connectés entre les bus BID et BIS.

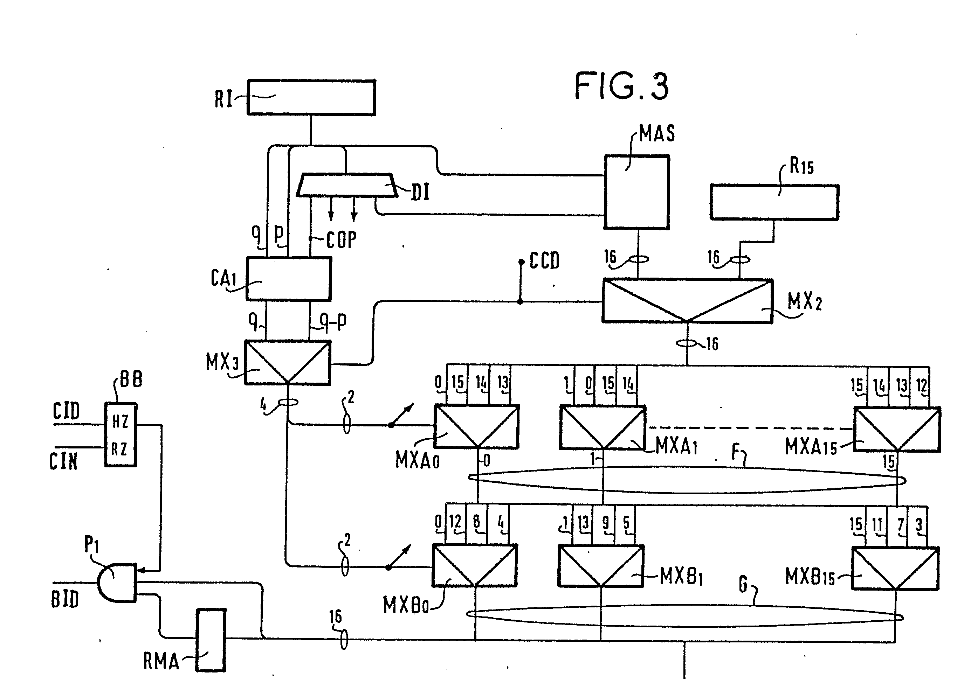

L'unité logique est pilotée par une horloge H dont les signaux seront décrits avec le fonctionnement de l'unité logique. Le décaleur DEC est représenté à la figure 3. L'opération à réaliser est la suivante :

3

— soit une information de 16 e. b. (X0, X1, X2 ... X14, X15) disponibles en parallèle.

Le dispositif permet d'obtenir dans un temps très court sur un bus à émetteur en collecteur ouvert, une information constituée d'un champ de n éléments binaires consécutifs pris dans (X0, X1 ... X14, X15) complétés de zéros pour constituer un mot de 16 e. b.,

le nombre n étant choisi à volonté ainsi que le rang de départ p (de 0 à 15) du premier e. b. de ce champ et ainsi que le rang q (de 0 à 15) où se trouve positionné en final ce premier e. b. :

mot de départ : X0, X1, X2, X3, X4, X5, X6, X7, X8, X9, X10, X11, X12, X13, X14, X15,

mot final : 00 ... 0Xp    Xp + 1, Xp + 2 ... Xp + n − 1    00  0

rang 0   rang 1    rang q

L'objectif de rapidité nécessite les moyens suivants constituant les originalités du dispositif :

— traitement de décalage et de masquage assurés par des dispositifs travaillant en parallèle et non par décalage série ;

— dispositif de validation particulier des émetteurs collecteur ouvert disposés en sortie de l'ensemble.

L'ensemble des opérations logiques à réaliser est le suivant :

A. Décalage du mot de départ de (q-p) positions vers la droite, (q-p) étant en valeur algébrique, ce qui donne un mot noté G.

B. Constitution d'un masque constitué d'un champ de n e. b. à 1 consécutifs, les autres e. b. étant à zéro, ce champ étant positionné de telle sorte que son premier e. b. (e. b. de gauche) soit en position q.

C. Intersection du mot G et du masque pour obtenir le mot final.

D. Emission du mot final sur le bus collecteur ouvert.

### Opération A

La nécessité de rapidité exclut l'utilisation d'un registre exploité en décalage série.

Le dispositif adopté utilise :

a) un dispositif de calcul arithmétique réalisant à partir des données p et q l'opération (q-p) modulo 16 ;

b) un ensemble de multiplexeurs dont le principe peut se décrire comme suit

— 16 multiplexeurs à 16 entrées, une sortie : le m-ième multiplexeur délivre l'e. b. du rang final m et reçoit en entrée les e. b. de départ de rang (dans l'ordre) :

m, m − 1, m − 2 ... 0, 15, 14 ... m + 1, chaque multiplexeur est commandé par la même valeur (q-p) qui définit le rang m-(q-p) de l'e. b. d'entrée qui est dirigé en sortie du multiplexeur ;

— un premier mode de réalisation de ce dispositif utilise des multiplexeurs 16 entrées, 1 sortie. En composants classiques, ces multiplexeurs sont encombrants ; un mode de réalisation moins encombrant, basé sur la formule (q-p) = 4 r + s, utilise un double étage de multiplexeurs (fig. 3) ;

— un premier étage délivre un mot intermédiaire noté F ; il est constitué de 16 multiplexeurs (MXA0 à MXA15, 4 entrées, 1 sortie), commandés par les deux poids faibles de (q-p) c'est-à-dire par s (0, 1, 2 ou 3). Pour ce faire, le multiplexeur de n° x délivre l'e. b. de rang x du mot F et reçoit dans l'ordre les e. b. de rangs x, x − 1, x − 2, x − 3 du mot de départ ; il sélectionne l'e. b. x − s ;

— un deuxième étage de multiplexeurs (MXB0 à MXB15, 4 entrées, 1 sortie), traite le mot F et délivre le mot G ; il est commandé par les 2 poids forts de (q − p) c'est-à-dire par r (0, 1, 2 ou 3). Pour ce faire le multiplexeur de n° y délivre l'e. b. de rang y du mot G et reçoit dans l'ordre les e. b. de rangs y, y − 4, y − 8, y − 12 du mot F ; il sélectionne l'e. b. de rang y − 4 r.

### Opérations B et C

Le circuit de préparation de masquage MAS est constitué par des portes ET et des portes OU associées à un multiplexeur formant un ensemble combinatoire simple qui délivre, à partir de la donnée n codée sur 4 e. b. un mot de 16 e. b. constitué de la façon suivante :

$$1\ 1\ 1 \ldots 1\ 1 \qquad 0\ 0 \ldots 0\ 0$$

n e. b. à « 1 »      reste à zéro

Ce mot appelé masque intermédiaire est amené en position adéquate (c'est-à-dire le premier e. b. du champ de « 1 » en position q) par un décaleur identique au précédent, mais commandé par la valeur q. Il est économiquement intéressant d'utiliser le même décaleur que dans le paragraphe b en opérant de la façon suivante :

— décalage du masque intermédiaire pendant un temps T1 avec stockage du résultat (masque final) dans le registre RMA (fig. 2).

— décalage de l'information X0 ... X15 pendant le temps T2 suivant T1 pour obtenir le mot G qui est alors mis en ET (porte P1) bit à bit avec le masque final stocké pour obtenir le mot final. Ce procédé nécessite d'adjoindre au décaleur précédemment décrit :

— un multiplexeur MX2 à 2 entrées de 16 e. b. en amont du décaleur commutant le masque intermédiaire pendant T1 et l'information X0 ... X15 en sortie du registre RIS pendant T2 ;

— un multiplexeur MX3 à 2 entrées de 4 e. b. pour la commande du décaleur, commutant la valeur q pendant le temps T1 et la valeur (q-p) pendant le temps T2.

### Opération D

Emission du mot final sur un bus collecteur ouvert. Les capacités des lignes chargées par des émetteurs en collecteur ouvert provoquent le phénomène suivant : le basculement de l'état 1 électrique à l'état 0 électrique sur le bus est très rapide (saturation du transistor émetteur) mais le basculement de l'état 0 électrique à l'état 1 électrique est par contre plus lent (constante de temps RC, R résistance de charge du collecteur ouvert, C capacité de ligne). En conséquence, si l'on dispose en aval du montage décrit précédemment (opérations A, B, C) un étage collecteur ouvert validé en permanence ou avant stabilisation des données en sortie de ce montage, des états transitoires induits par la valeur antérieure des données dans ce montage apparaîtront en sortie sur le bus ; il en résulte que lors de la stabilisation des informations en sortie du montage précédent il faut encore attendre un certain temps fonction de RC pour acquérir à coup sûr les données, du fait que la donnée finale peut être un 1 électrique et que la donnée transitoire antérieure peut être un 0 électrique. Afin de pallier ce temps de latence, le dispositif original décrit ici, consiste à inhiber les émetteurs collecteur ouvert pendant un temps DT avant stabilisation des informations en amont de ces émetteurs, ces émetteurs n'étant validés que lorsque les informations en amont sont stables et le temps DT ayant une durée suffisante pour assurer (quel que soit l'état initial) un 1 électrique en sortie de l'émetteur collecteur ouvert à la fin de cette période DT. De la sorte lors de la validation de chaque émetteur :

— ou bien la valeur finale attendue est un 1 électrique et l'état n'est pas modifié ;

— ou bien la valeur finale attendue est un 0 électrique et le basculement est très rapide.

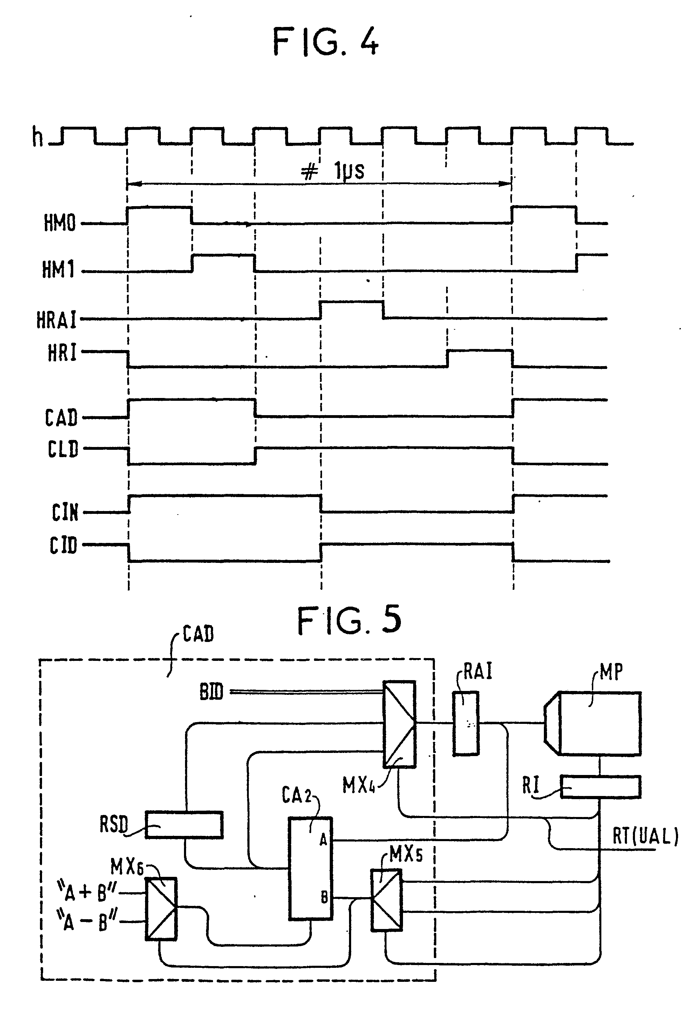

Dans les 2 cas l'information est donc disponible rapidement pour l'acquisition. La temporisation est réalisée par une bascule BB positionnée au moment du chargement des registres RMA et RIS et remise à zéro en fin d'instruction. Cette bascule valide l'entrée des portes P1. Les fronts de chargement CID et de remise à zéro CIN apparaissent sur le diagramme de la figure 4.

Le dispositif de calcul de la valeur q-p CA1 est par exemple un circuit 74181 déjà cité, q et p étant fournis en sortie du registre RI. Le code opératoire est lu en sortie du décodeur DI.

On va décrire maintenant à titre d'exemple le circuit de calcul d'adresse du programme CAD représenté à la figure 5. Précisons d'abord que le passage d'une micro-instruction à la suivante peut être réalisé de deux manières :

1. Par saut à une instruction quelconque dont l'adresse est lue sur le bus BID.

2. Par saut de n pas en avant ou en arrière, n étant indiqué par la micro-instruction en cours, et le sens du saut étant fixé par le résultat d'un test lu sur la sortie RT du circuit UAL.

L'accès au registre RAI est effectué par un multiplexeur MX4 à 3 entrées dont l'une reçoit le bus BID (cas 1), l'autre une valeur stockée dans un registre RSD, et la dernière la valeur contenue dans RAI augmentée ou diminuée de la valeur du saut. Le calcul est réalisé par un boîtier CA2 (par exemple 74181) utilisé pour les fonctions « A + B » et « A − B », recevant l'opérande A en sortie du registre RAI et B en sortie du registre RI. Un multiplexeur MX5 donne accès à B car, comme on le verra dans le code d'instruction décrit plus loin, la valeur du saut n'est pas codée sur les mêmes e. b. dans toutes les instructions de saut. Le code opératoire du circuit CA2 est câblé, et un multiplexeur MX6 commandé sur un fil en sortie du multiplexeur MX5 donne accès au code « A + B » ou « A − B ».

Le multiplexeur MX4 est commandé par un e. b. (a) du mot programme et par le résultat de test RT en sortie de l'unité UAL dans les conditions suivantes :

a = 1 accès à BID.

a = 0 $\begin{cases} \text{RT} = 1 \text{ accès à la sortie de CA2.} \\ \text{RT} = 0 \text{ accès à la sortie de RSD.} \end{cases}$

### Code opératoire de la machine

Ce code est représenté au tableau 1 ci-après :

— ORDO correspond à un code d'instruction nul

— les quinze instructions se ramènent à 6 instructions de base (deux premières lettres de l'instruction) :

AC : assemblage champs.

CH : chargement d'un registre.

EM : écriture d'une mémoire.

CO : comparaison.

TI : test immédiat.
OP : opération.

Code d'ordre machine

| 0 | ORDO | | | | | | | | | | |
|---|---|---|---|---|---|---|---|---|---|---|---|
| 1 | ACP | TCD | L-1 | CP | | ▨ | | | SP | s | I |
| 2 | CHR | TCD | L-1 | TCS | S | | D | | SP | s | I |
| 3 | EMR | TCD | L-1 | TCS | S | MD | | IND | SP | s | I |
| 4 | COR | TCD | L-1 | TCS | S | SPD | s | | SP | s | I |
| 5 | ACR | TCD | L-1 | TCS | S | | | | SP | s | I |
| 6 | TIR | OT | L-1 | TCS | S | SPD | s | | SP | s | I |
| 7 | OPR | TCD | L-1 | TCS | S | POP | | | SP | s | I |
| 8 | CHP | Paramètre | | | | ▨ | D | | SP | s | I |
| 9 | EMP | Paramètre | | | | ▨ | MD | IND | SP | s | I |
| 10 | CHM | TCD | L-1 | TCS | MS | INS | D | | SP | s | I |
| 11 | EMM | TCD | L-1 | TCS | MS | INS | MD | IND | SP | s | I |
| 12 | COM | TCD | L-1 | TCS | MS | INS | SPD | s | SP | s | I |
| 13 | ACM | TCD | L-1 | TCS | MS | INS | | | SP | s | I |
| 14 | TIM | OT | L-1 | TCS | MS | INS | SPD | s | SP | s | I |
| 15 | OPM | TCD | L-1 | TCS | MS | INS | POP | | SP | s | I |

la dernière lettre de l'instruction précise l'origine de l'information source :
— R : registre.
— M : mémoire.
— P : paramètre.
les arguments sont les suivants :
— TCD : tête de champ destination.
— TCS : tête de champ source.
— (L-1) : longueur (nombre d'e. b.), moins 1, du champ.
— OT : opérande de test.
— CP : champ paramètre.
— S : numéro de registre source.
— D : numéro de registre destination.
— MS : mémoire source.
— MD : mémoire destination.
— INS : index en source.
— IND : index en destination.
— PARAMETRE : paramètre source.
— COP : code opératoire du circuit UAL.
— SP : saut de phase (avec son signe s).
— SPD : saut de phase défavorable (signe s).
— I : e. b. d'imparité sur le mot programme.
Le cycle d'instruction est divisé en 3 phases :
— lecture de l'information source,
— traitement et chargement du circuit destinataire,
— lecture de l'instruction suivante.
L'horloge H qui rythme les opérations a avantageusement une période qui est un sous-multiple simple de celle de la récurrence des MIC. Dans l'exemple décrit (fig. 4) la fréquence de base h est égale à 4 fois la fréquence de base du MIC, soit environ 6 MHz :

— un premier signal HMO permet sur son front descendant, l'adressage de la source ;

— le front descendant d'un signal HM1, en fin du premier tiers du cycle, permet de charger les registres RIS, RMA ;

— le front descendant d'un signal HRAI charge le registre RAI et permet la lecture de l'instruction suivante ;

— enfin le front descendant d'un signal HRI charge le registre RI.

L'horloge fournit également les niveaux CAD, CCD de validation source et destinataire, et CIN, CID de validation de l'assemblage de champ.

Enchaînement des programmes.

La machine ne possède pas de dispositif d'interruption. Les programmes réalisant une tâche déterminée peuvent faire appel à des sous-programmes. L'interruption par un programme plus prioritaire peut être réalisée par logiciel mais ce processus est complexe et dans la mesure du possible les·tâches sont exécutées sans interruption.

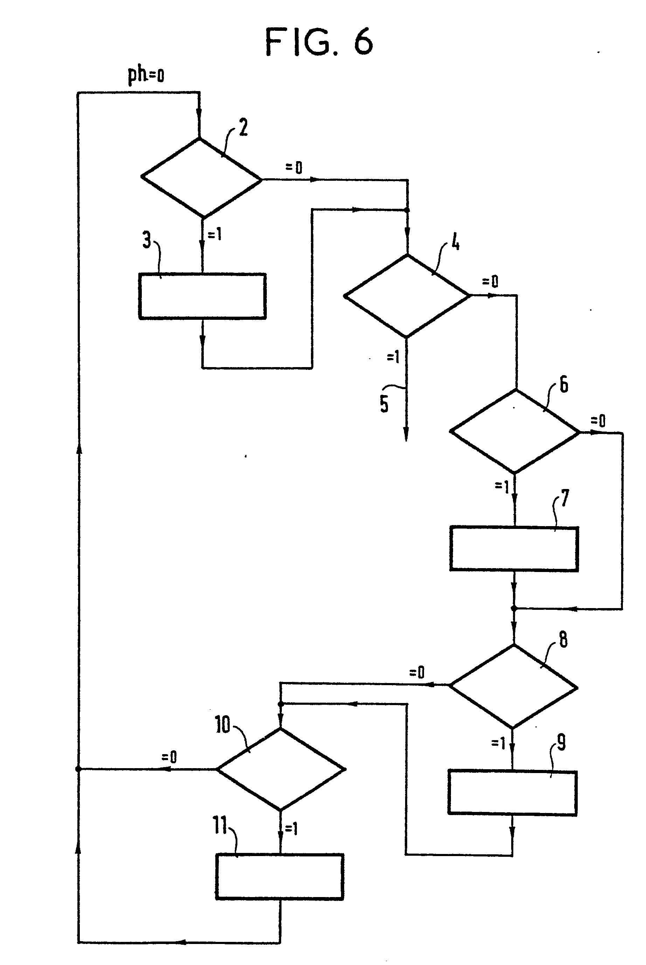

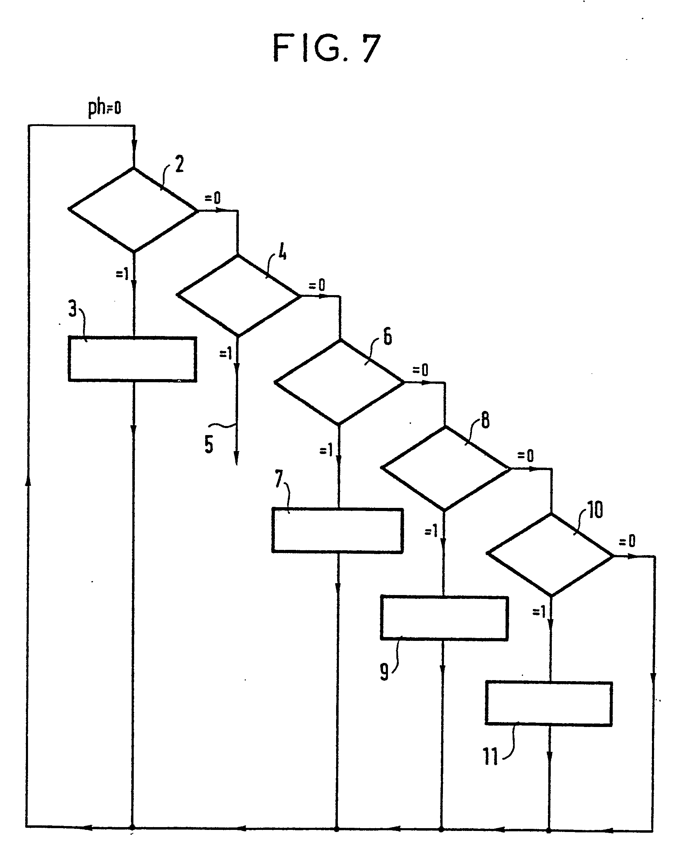

Pour l'exécution de tâches demandées par des modules extérieurs, ceux-ci sont dotés d'une bascule d'appel. L'enchaînement des tâches est aussi réalisé par un programme de recherche de tâches débutant en phase zéro (ph = 0), et venant tester les bascules d'appel. Le programme de recherche peut être organisé à la convenance de l'utilisateur : traitement des tâches en série (fig. 6), avec priorités fixes (fig. 7) ou avec priorités tournantes.

Les figures 6 et 7 donnent un exemple de 3 tâches machine et 2 tâches appelées par pupitre.

Les opérations représentées sur les figures 6 et 7 sont les suivantes :

2 — test de remise à zéro générale à partir du pupitre,

3 — traitement du test 2,

4 — test de la tâche appelée par le pupitre,

5 — programme appelé par le pupitre,

6 — test bascule d'appel de la tâche 1,

7 — traitement de la tâche 1,

8 — test bascule d'appel de la tâche 1,

9 — traitement de la tâche 2,

10 — test bascule d'appel de la tâche 3,

11 — traitement de la tâche 3.

Suivant la figure 7 un retour à 0 est effectué après chaque traitement de tâche de façon à permettre l'exécution de la tâche prioritaire.

Traitement des échanges de messages entre un calculateur et les périphériques téléphoniques.

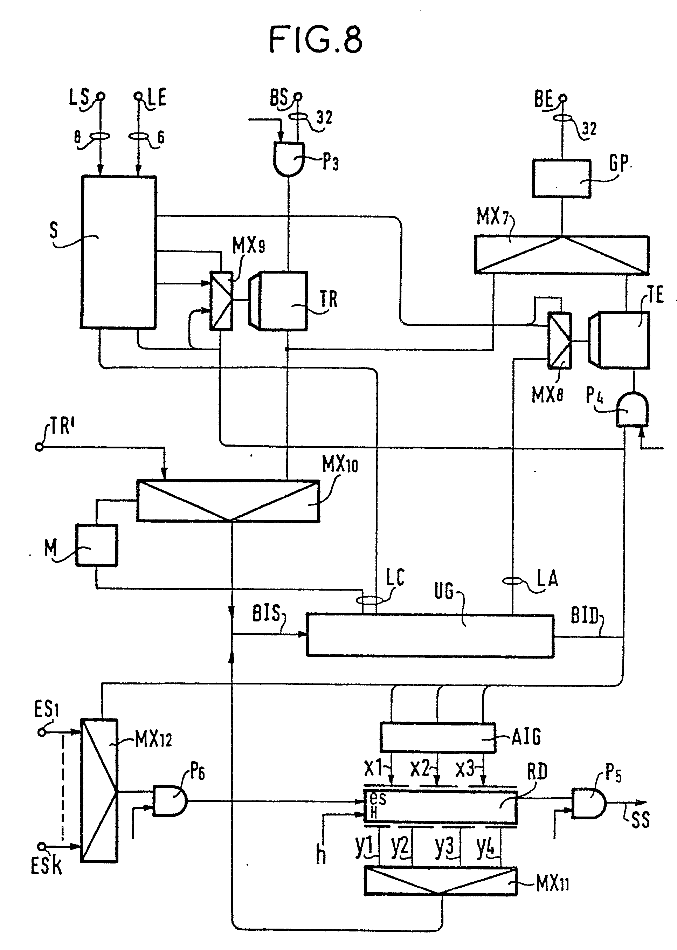

Echanges de messages avec le calculateur : ils sont effectués par un module raccordé comme indiqué précédemment à l'unité de gestion (UG, fig. 8).

La liaison entre le module et l'interface de couplage CO du calculateur comporte 2 bus d'échanges d'informations et deux liaisons de commande.

— Un bus de sortie de 32 e. b. BS qui est raccordé, dans le module, à l'entrée d'une mémoire tampon de réception TR par l'intermédiaire de portes de validation P3.

— Un bus d'entrée BE de 32 e. b. d'informations de 4 e. b. de parité, raccordé à la sortie d'un multiplexeur MX7 par l'intermédiaire d'un générateur d'e. b. de parité GP. Le multiplexeur MX7 donne accès au bus BE soit à partir de la mémoire tampon TR, soit à partir d'une mémoire tampon d'émission TE.

— Une liaison sortante LS à 8 e. b. de commande dont l'utilisation sera précisée plus loin.

— Une liaison entrante LE à 6 e. b. de commande. La liaison LE est propre à chaque unité de gestion, alors que la liaison LS et les bus BE et BS sont communs à toutes les unités de gestion.

Les liaisons LE et LS sont raccordées à un circuit séquentiel S qui a pour rôle de valider les échanges : validation du numéro de l'unité de gestion habilitée à utiliser les bus, et validation du sens de l'échange.

Les mémoires tampons TE et TR permettent de stocker un seul message. On utilise de préférence des mémoires permettant de stocker un message de plusieurs mots. Les mémoires sont adressées à travers des multiplexeurs (respectivement MX8, MX9) à partir du séquentiel S, ou de l'unité de gestion UG, suivant le sens de l'échange. Le bus BID de l'unité UG est relié à l'entrée de la mémoire tampon d'émission par des portes de validation P4, et également au séquentiel S.

La sortie de la mémoire tampon TR est reliée au bus BIS par un multiplexeur MX10 à 2 entrées. La seconde entrée peut être reliée à la sortie de la mémoire tampon TR' d'un second module. En effet dans le cas où le central comporte 2 calculateurs de commande (CAL, fig. 1), chaque unité UG est reliée à chaque calculateur par un module. Le multiplexeur MX10 est contrôlé par un point mémoire M, positionné par l'unité UG, indiquant quel est le calculateur avec lequel l'unité est en liaison.

Echanges de messages avec les périphériques.

Ces messages comportent un mot de 32 e. b. émis et reçu en série par l'intermédiaire d'un registre à décalage RD. Ce registre constitue un module vis-à-vis de l'unité UG, et il est formé de plusieurs registres en série, de manière à permettre le chargement et le déchargement de parties de messages par l'unité UG.

Pour cela les entrées d'informations en parallèles x1, x2, x3 véhiculant ces parties de messages sont reliées au bus BID par un aiguilleur AIG. Les sorties parallèles y1 à y4 sont reliées au bus BIS par un multiplexeur MX11.

L'émission du message contenu dans le registre RD est faite sur la liaison série SS multipliée sur tous les périphériques contrôlés par l'unité UG. La sortie série du registre RD est reliée à la liaison SS par un groupe de portes de validation P5. Le message est émis sous la commande d'impulsions d'horloge h. En réception, chaque périphérique a accès à une entrée série (ES1 à ESk) de l'unité UG. Ces entrées sont reliées à l'entrée série ES du registre RD par un multiplexeur à k entrées (MX12) et des portes de validation P6.

Formats des messages.

Les messages sont constitués d'ordres dans le sens calculateur vers périphériques, et dans le sens inverse de compte rendus d'ordres et de détections d'événements (changements d'états, fautes...).

— Format des messages entre calculateur et UG (2 mots de 32 e. b.).

| FONCTION | ERREUR | ETIQUETTE | DONNEES |
|---|---|---|---|
| NUMERO PERIPHERIQUE | | DONNEES | |

Le premier mot comporte un code de fonction qui précise l'ordre qu'exécute ou doit exécuter le périphérique, un code de message d'erreur, une étiquette qui permet au calculateur d'identifier la tâche correspondant au message, et les données proprement dites.

Le deuxième mot comporte le numéro d'identification du périphérique destinataire ou émetteur du message. Les messages de procédure sur les liaisons LS et LE ont les formats suivants :

— liaison LS (8 e. b.).

Les e. b. 1 à 4 valident le numéro du calculateur, le sens de l'échange et le numéro du mot du message (1$^{er}$ mot ou 2$^e$ mot).

Les e. b. 5 à 8 indiquent le numéro de l'unité de gestion concernée :

— liaison LE (6 e. b.) : les e. b. précisent l'état de l'unité de gestion (validation et disponibilité) et la matière du message (compte rendu d'exécution d'un ordre, détection d'un événement, faute).

— Format des messages entre UG et périphériques (un mot de 32 e. b.). Message UG vers périphérique (message aller).

| PARITE | NUMERO DE PERIPHERIQUE | FONCTION | NUMERO DE VOIE | DONNEE |
|---|---|---|---|---|

Le numéro de voie identifie la voie temporelle (c'est-à-dire le circuit téléphonique) concernée par le message.

Message périphérique vers UG (message retour).

Ce message comporte les mêmes informations, à l'exception du numéro de périphérique qui n'est plus nécessaire du fait qu'il y a une liaison par périphérique (entrées ES1 à ESk, fig. 8).

A la place de ce numéro, le message comporte :

— un code de contrôle de parité du message aller auquel correspond le message retour ;

— un code de reconnaissance indiquant que le périphérique a reconnu que le message aller lui était destiné ;

— un résultat de comparaison (utilisé dans le cas où le message aller correspondait à un ordre de comparaison ;

— un code de type identifiant la nature du périphérique (la procédure étant la même pour tous les types).

Ces procédures permettent donc d'identifier toutes les informations ainsi que le calculateur, l'unité de gestion, le périphérique et le circuit téléphonique concernés.

D'autre part, l'enchaînement des traitements de messages par l'unité de gestion est réalisé en tenant compte des procédures de priorité décrites précédemment.

Bien entendu l'invention n'est pas limitée à la réalisation décrite à titre d'exemple.

## Revendications

1. Unité logique (UGM ; UGR ; UGE) de gestion des messages échangés entre un calculateur (CAL) et des périphériques dans un système de télécommunications notamment dans un autocommutateur piloté par un calculateur central (CAL) pour la gestion des messages échangés entre le calculateur central (CAL) et des groupes de périphériques (E ; R ; MQ) assurant l'émission et la réception de la signalisation et le marquage des itinéraires dans un réseau de connexion (RCX) caractérisée en ce qu'elle comporte un bloc d'assemblage de champ réalisant l'assemblage par décalage d'une information source et superposition d'un masque et comprenant un dispositif de décalage (DEC) relié par l'intermédiaire d'un registre (RIS) à un bus d'information source (BIS) sur lequel sont acquises les informations traitées par

**0 018 911**

une instruction et à un circuit de préparation de masque (MAS), la superposition du masque et du contenu du registre (RIS) étant réalisée par un groupe de portes (P1) reliées, d'une part, à la sortie du dispositif de décalage (DEC) et, d'autre part, à un bus d'information destination (BID) véhiculant les informations après traitement, et en ce qu'elle comprend une unité arithmétique et logique (UAL) dont l'une des entrées d'opérande (A) est reliée à la sortie du groupe de portes (P1), et dont la sortie est reliée au bus d'information source (BIS), les liaisons avec l'extérieur étant réalisées par les bus d'information source et destination reliés à des modules d'échanges (ME) et l'ensemble étant piloté par une horloge (H), et que le dispositif de décalage comporte un circuit de préparation de masque générant un mot formé d'une série de 1 suivie d'une série de 0, le masque subissant lui-même un décalage.

2. Unité logique suivant la revendication 1, caractérisée par le fait que les données à décaler et le masque utilisent le même dispositif de décalage, le masque étant décalé le premier et stocké dans un registre.

3. Unité logique suivant la revendication 1, caractérisée par le fait que la sortie du dispositif de décalage (DEC) est reliée au bus d'information destination (BID) par un groupe de portes à collecteur ouvert (P1) inhibé avant lecture des informations.

4. Unité logique selon la revendication 1, caractérisée par le fait qu'à la sortie du dispositif de décalage (DEC) est relié un registre (RMA) pour le stockage du masque après décalage par le dispositif de décalage (DEC).

5. Unité logique selon la revendication 1, caractérisée par le fait que le dispositif de décalage (DEC) comporte deux étages de multiplexeurs :

un premier étage de multiplexeurs (MXA0 ... MXA15) commandés par deux poids faibles de valeur q-p, q étant le rang final du premier élément binaire d'un champ après décalage et p étant le rang de cet élément avant décalage,

un deuxième étage de multiplexeurs (MXB0 ... MXB15) commandés par deux poids forts de valeur q-p.

6. Unité logique selon la revendication 1, caractérisée par le fait qu'au dispositif de décalage (DEC) est connecté un multiplexeur (MX2) à deux entrées dont l'une est reliée au circuit de préparation de masque (MAS) et l'autre au registre (R15) fournissant les informations et un multiplexeur (MX3) à deux entrées pour la commande du dispositif de décalage (DEC).

7. Unité logique selon la revendication 1, caractérisée par le fait qu'elle comprend une liaison d'adresses (LA) pour l'acheminement progressif des adresses source et destination, une liaison de commande (LC) véhiculant un mot programme, ces liaisons étant issues d'un décodeur d'instruction (DI) dont l'entrée est reliée à une mémoire programme (MP) adressée par un registre d'adresse (RAI) relié à un dispositif de calcul d'adresse (CAD), le mot programme en cours étant stocké dans un registre d'instructions (RI) dont la sortie est reliée au décodeur (DI) et par un interface d'adaptation (IA) au bus d'information source (BIS).

8. Unité logique selon la revendication 7, caractérisée par le fait que le dispositif de calcul d'adresse (CAD) comporte un multiplexeur (MX4) pour l'accès au registre d'adresse (RAI) et un multiplexeur (MX5) pour l'accès à un organe de calcul (CA2) fournissant des fonctions A + B et A − B au moyen d'un troisième multiplexeur (MX6), A étant l'opérande contenue au registre d'adresse (RAI) et B le mot programme contenu en registre d'instruction (RI).

**Claims**

1. A logic unit (UGM ; UGR ; UGE) for the treatment of messages exchanged between a computer (CAL) and peripheral units in a telecommunication system, especially in an automatic exchange device commanded by a central computer (CAL), for the treatment of the messages exchanged between the central computer (CAL) and groups of peripheral units (E ; R ; MQ) ensuring the emission and reception of the signalisation and the marking of the itineries in a connection network (RCX), characterized in that it comprises a field assembling block which assembles the field by shifting a source information and superposing a mask, and which comprises a shift device (DEC) connected via a register (RIS) to a source information bus (BIS) on which are acquired the informations processed by an order, and to a mask preparation circuit (MAS), the superposition of the mask and of the content of the register (RIS) being realised by a group of gates (P1) connected on the one hand to the output of the shift device (DEC), and on the other hand to a destination information bus (BID) conveying the informations after processing, and in that it comprises an arithmetic and logic unit (UAL), one of the operandus inputs (A) of which is connected to the output of the group of gates (P1), and the output of which is connected to the source information bus (BIS), the links with the exterior being realised by source and destination information busses connected to exchange modules (ME), and the whole being commanded by a clock (H), and that the shift device comprises a mask preparation circuit producing a word which is formed of a series of « ones » followed by a series of « zeros », the mask being itself submitted to shifts.

2. A logic unit according to claim 1, characterized in that the data to be shifted and the mask use the same shift device, the mask being shifted first and stored in a register.

3. A logic unit according to claim 1, characterized in that the output of the shift register (DEC) is

9

connected to the destination information bus (BID) by a group of gates with open collector (P1) inhibited before lecture of the informations.

4. A logic unit according to claim 1, characterized in that a register (RMA) for storing the mask after shifting by the shift device (DEC) is connected to the output of the shift device (DEC).

5. A logic unit according to claim 1, characterized in that the shift device (DEC) comprises two stages of multiplexers :

a first stage of multiplexers (MXA0 ... MXA15) controlled by two low weight digits of the value q-p, q being the final rank of the first binary element of a field after shifting and p being the rank of this element before shifting,

a second stage of multiplexers (MXB0 ... MXB15) controlled by two heavy weight digits of the value q-p.

6. A logic unit according to claim 1, characterized in that a multiplexer (MX2) with two inputs, one of which is connected to the mask preparation circuit (MAS) and the other to the register (R15) furnishing the informations and a multiplexer (MX3) with three inputs for the control of the shift device (DEC) are connected to the shift device (DEC).

7. A logic unit according to claim 1, characterized in that it comprises an address connection (LA) for the progressive transfer of the addresses of the source and of the destination, a control connection (LC) conveying a program word, these connections issuing from an order decoder (DI), the input of which is connected to a program memory (MP) addressed by an address register (RAI) which is connected to an address computing device (CAD), the actual program word being stored in an order register (RI), the output of which is connected to the decoder (DI) and via an adaption interface (IA) to the source information bus (BIS).

8. A logic unit according to claim 7, characterized in that the address computing device (CAD) comprises a multiplexer (MX4) for the access to the address register (RAI) and a multiplexer (MX5) for the access to a computer organ (CA2) furnishing functions A + B and A − B by means of a third multiplexer (MX6), A being the operandus contained in the address register (RAI) and B the program word contained in the order register (RI).

## Ansprüche

1. Logische Einheit (UGM ; UGR ; UGE) zur Behandlung von zwischen einem Rechner (CAL) und peripheren Geräten ausgetauschten Nachrichten in einem Fernmeldesystem, insbesondere in einer von einem zentralen Rechner (CAL) gesteuerten Selbstwählvermittlungsanlage zur Behandlung von zwischen dem zentralen Rechner (CAL) und Gruppen von Peripheriegeräten (E ; R ; MQ) ausgetauschten Nachrichten, wobei die Einheit die Aussendung und den Empfang der Vermittlungssignale und die Wegemarkierung in einem Vermittlungsnetz (RCX) bewirkt, dadurch gekennzeichnet, daß sie einen Feldzusammenstellungsblock aufweist, der die Zusammenstellung durch Verschiebung einer Quellinformation und durch Überlagerung einer Maske bewirkt und der eine Verschiebevorrichtung (DEC) besitzt, die über ein Register (RIS) an einen Quellinformationsbus (BIS), auf dem die von einem Befehl behandelten Informationen erhalten werden, sowie an einen Maskenvorbereitungsschaltkreis (MAS) angeschlossen ist, wobei die Verknüpfung der Maske und des Inhalts des Registers (RIS) von einer Gruppe von Toren (P1) bewirkt wird, die einerseits an den Ausgang der Verschiebevorrichtung (DEC) und andererseits an einen Zielinformationsbus (BID) angeschlossen sind, auf dem die Informationen nach ihrer Verarbeitung verlaufen, und daß sie eine arithmetische und logische Einheit (UAL) aufweist, deren einer Operandeneingang (A) an den Ausgang der Gruppe von Toren (P1) und deren Ausgang an den Quellinformationsbus (BIS) angeschlossen ist, wobei die Verbindungen nach außen durch den Quellinformationsbus und den Zielinformationsbus erfolgen, die an Austauschmoduls (ME) angeschlossen sind, und wobei das Ganze von einem Taktgeber (H) gesteuert wird und die Verschiebevorrichtung einen Maskenvorbereitungsschaltkreis aufweist, der ein aus einer Reihe von Einsen, gefolgt von einer Reihe von Nullen bestehendes Wort erzeugt, wobei die Maske selbst einer Verschiebung unterzogen wird.

2. Logische Einheit nach Anspruch 1, dadurch gekennzeichnet, daß die zu verschiebenden Daten und die Maske die gleiche Verschiebevorrichtung benutzen, wobei die Maske zuerst verschoben und in einem Register gespeichert wird.

3. Logische Einheit nach Anspruch 1, dadurch gekennzeichnet, daß der Ausgang der Verschiebevorrichtung (DEC) mit dem Zielinformationsbus (BID) über eine Gruppe von Toren mit offenem Kollektor (P1) verbunden ist, der vor dem Lesen der Informationen gesperrt wird.

4. Logische Einheit nach Anspruch 1, dadurch gekennzeichnet, daß an den Ausgang der Verschiebevorrichtung (DEC) ein Register (RMA) zur Speicherung der Maske nach Verschiebung durch die Verschiebevorrichtung (DEC) angeschlossen ist.

5. Logische Einheit nach Anspruch 1, dadurch gekennzeichnet, daß die Verschiebevorrichtung (DEC) zwei Multiplexerstufen aufweist :

eine erste Stufe von Multiplexern (MXA0 ... MXA15), die von zwei Bits geringen Stellenwerts des Werts q-p gesteuert werden, wobei q der Endrang des ersten Binärelements eines Feldes nach Verschiebung und p der Rang dieses Elements vor der Verschiebung ist, eine zweite Stufe von Multiplexern (MXB0 ... MXB15), die von zwei Bits hohen Stellenwerts des Werts q-p gesteuert werden.

6. Logische Einheit nach Anspruch 1, dadurch gekennzeichnet, daß mit der Verschiebevorrichtung (DEC) ein Multiplexer (MX2) mit zwei Eingängen, von denen der erste an den Maskenvorbereitungsschaltkreis (MAS) und der andere an das Register (R15) angeschlossen ist, das die Informationen liefert, und ein Multiplexer (MX3) mit zwei Eingängen zur Steuerung der Verschiebevorrichtung (DEC) verbunden sind.

7. Logische Einheit nach Anspruch 1, dadurch gekennzeichnet, daß sie eine Adressenverbindung (LA) zur fortschreitenden Beförderung der Quell- und Zieladressen und eine Steuerverbindung (LC) aufweist, die ein Programmwort überträgt, wobei diese Verbindungen von einem Befehlsdekodierer (DI) ausgehen, dessen Eingang mit einem Programmspeicher (MP) verbunden ist, der von einem mit einer Adressenrechenvorrichtung (CAD) verbundenen Adressenregister (RAI) adressiert wird, wobei das aktuelle Programmwort in einem Befehlsregister (RI) gespeichert wird, dessen Ausgang an den Dekodierer (DI) und über eine Anpassungsschnittstelle (IA) an den Quellinformationsbus (BIS) angeschlossen ist.

8. Logische Einheit nach Anspruch 7, dadurch gekennzeichnet, daß die Adressenrechenvorrichtung (CAD) einen Multiplexer (MX4) für den Zugang zum Adressenregister (RAI) und einen Multiplexer (MX5) für den Zugang zu einem Rechenorgan (CA2) aufweist, das Funktionen A + B und A − B mittels eines dritten Multiplexers (MX6) liefert, wobei A der im Adressenregister (RAI) enthaltene Operand und B das im Befehlsregister (RI) enthaltene Programmwort ist.

FIG.1

FIG. 2

0 018 911

FIG.3

# FIG. 4

# FIG. 5

# FIG. 6

# FIG. 7

# FIG.8